# EUROPEAN PATENT SPECIFICATION

(11) **EP 2 717 686 B1**
(45) Date of publication and mention of the grant of the patent: **02.09.2020**
(21) Application number: 12796939.2
(22) Date of filing: 08.06.2012
(51) Int. Cl.: A01N 25/04, A01N 25/30, A01N 43/70, A01N 47/04, A01N 47/14, A01N 47/30, C07C 69/00, C08G 63/56, C08G 63/664, A01P 3/00, A01P 13/02

(54) **STRUCTURING AGENTS AND EMULSIFIERS FOR AGRICULTURAL OIL-BASED FORMULATIONS**
STRUKTURANTEN UND EMULGATOREN FÜR LANDWIRTSCHAFTLICHE FORMULIERUNGEN AUF ÖLBASIS
AGENTS STRUCTURANTS ET ÉMULSIFIANTS DESTINÉS À DES FORMULATIONS À BASE D'HUILE POUR L'AGRICULTURE

(30) Priority: 10.06.2011 AU 2011902300
(43) Date of publication of application: 16.04.2014
(73) Proprietor: Indorama Ventures Oxides Australia Pty Limited, Brooklyn, Victoria 3012 (AU)
(72) Inventor: MOODY, Keith, Balwyn North, Victoria 3104 (AU); SAYLIK, Dilek, Meadow Heights, Victoria 3048 (AU); BROWN, Rowan, Fleminton, Victoria 3031 (AU)
(74) Representative: Weidner Stern Jeschke
(86) International application number: PCT/AU2012/000662
(87) International publication number: WO 2012/167322

(56) References cited:
- EP-A2- 0 875 142
- WO-A1-01/87064
- WO-A1-2008/142391
- WO-A1-2008/142391
- WO-A2-2008/155108
- WO-A2-2008/155108
- WO-A2-2009/152827
- WO-A2-2010/099965
- WO-A2-2010/099965
- GB-A- 1 469 531
- GB-A- 1 469 531
- GB-A- 2 002 400
- GB-A- 2 002 400
- US-A- 5 185 395
- US-A- 5 863 461
- US-A- 5 863 461
- US-A1- 2004 071 716
- US-A1- 2009 062 127
- UNIQEMA: "Atlox(R) Polymeric Surfactants: Agricultural Applications", TECHNICAL BULLETIN (UNIQEMA), XX, XX, 1 April 2000 (2000-04-01), pages 1-8, XP003032652,

## Description

### Field of the Invention

This invention relates to the stabilisation of oil-based suspension formulations of agriculturally active finely divided solids. More particularly, the invention relates to oil-based suspension formulations comprising an agriculturally active solid having improved stability.

### Background of the Invention

Formulations comprising an agriculturally active solid suspended in an oil, as the primary component of the continuous phase, have been found advantageous in the treatment of agricultural substrates. Examples of such formulations have been designated by CropLife International as OD ("oil dispersion") and OF ("oil-miscible flowable concentrate") formulations.

Such formulations provide certain advantages to the end user. They allow the formulation of active ingredients in solid suspended form, which ingredients cannot be formulated in water because of hydrolytic instability. Also, such formulations allow oil-based adjuvants to be incorporated into the formulation to enhance efficacy. Further, in many cases active ingredients have a solubility limit on the amount that can be loaded into a formulation, such as an emulsifiable concentrate formulation, and so suspension in an oil-based system can possibly lead to higher active ingredient strength formulations than would otherwise be possible.

A major limitation on an oil-based agricultural formulation, such as an OD and OF formulation, is the need to physically stabilize the formulation for potentially long periods of storage, so that it can be in a consistently useable form for later end use. Typically, an OD or OF formulation can exhibit sedimentation of the active ingredient particles over time into a hard-packed non-redispersible layer, or settling of the particles into the lower layers of the liquid column leading to the appearance of phase separation. This is what is commonly termed "syneresis". Depending on the density of the active ingredient and that of the oil phase used, it is also possible to find the active ingredient particles migrating to the top layers of the liquid column. This is often described as "reverse" or "top" syneresis. Such physical instability can occur regardless of the presence of an oil-based surfactant dispersant, which is designed to prevent flocculation of the dispersed particles.

In order for a stabilizer to be useful in an oil-based agricultural suspension, it must provide long term physical stability across a wide temperature range, normally 0°C to 54°C, while still maintaining a viscosity low enough to be practical for production of the formulation and its later end use. A typical viscosity required would be less than 2,000 centipoise ("cP") and preferably, less than 1200cP.

Various methods of stabilization of oil-based formulations are known. Typical stabilizers currently used for oil-based formulations include organically modified hectorite clay, such as the Bentone® range available from Elementis Specialties. In many of the systems that have been tested, the present inventors have found that these stabilizers do not appear to always impart stability across the desired temperature range on accelerated storage at an acceptable viscosity. Further, the thickeners used in some cases appear to inhibit some common non-aqueous dispersants used.

Hydrophobically-modified silicas are also currently used in the art. However, such stabilizers are limited in that the degree of hydrophobicity required cannot always be adequately tuned to that of the oil used. Further, such stabilizers often require the use of a small amount of hydrophilic agent, such as water, to help form a thickening structure in the oil phase. The use of water with silica in many cases negates the purpose of the formulation being anhydrous to avoid chemical degradation of the active ingredient. In many cases, the amount of silica stabilizer required to prevent undesirable sedimentation also leads to a formulation that is highly viscous and impractical to use.

Further, difficulty has been experienced in stabilizing certain active ingredients at their most desirable concentrations.

EP 0 875 142 A2 discloses a stable dispersion of a pesticide in an agricultural oil comprising an agricultural oil-soluble polymer said polymer having a weight average molecular weight from 3,000 to 120,000 and comprising from 2.5-35% by weight of a copolymerized polar monomer.

Accordingly, there is a need for improved stabilizers for oil-based agricultural suspension formulations.

The present invention seeks to provide an improved stabilized oil-based agricultural suspension formulation and a method for producing the same. More particularly, the present invention seeks to minimize or ameliorate disadvantages and problems found in the prior art.

### Summary of the Invention

While it is known that polyalkylene glycol-fatty acid poly condensate block co-polymer surfactants can be used as dispersing agents for oil-based systems and that such surfactants can also act as emulsifying agents for both oil-in-water and water-in-oil systems, it has now been unexpectedly found that a particular range of these surfactants, when used alone or in combination, can also act as structuring agents for agrochemical oil-based formulations, while still maintaining their dispersant and emulsifying functions. The present inventors have surprisingly identified certain polyalkylene glycol-fatty acid condensates and polyalkylene glycol ether-fatty acid poly condensate block copolymers which, when used according to the methods described herein, can afford greatly improved physical stability for an oil-based agricultural formulation, such as an OD or an OF formulation.

According to one aspect of the present invention, there is provided an agricultural oil-based suspension formulation comprising an active ingredient suspended in finely divided form in an oil; and at least one surfactant selected from a polyalkylene glycol-fatty acid condensate or a polyalkylene glycolether fatty acid condensate formed from a reaction between a compound having Structure (1) and a compound having Structure (2): 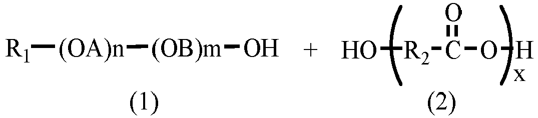
wherein R₁ = H or a C₁-C₃₀ alkyl radical;
   A and B are ethylene or propylene groups in succession or random;
   n = 0 or >1; and
   m=0 or >1,
and wherein n+m > 34;
   R₂ = C₈-C₃₀ alkyl or alkylene radical (branched or linear); and
   x = >1.

More preferably, the surfactant is a diblock condensate of polyethylene glycol, preferably having a molecular weight of greater than 1500amu, and a polyhydroxystearic acid copolymer of condensation range greater than 2 units, as per Structure (2). In its most preferred form, the surfactant comprises at least one monoblock condensate of a polyalkylene glycol ether-fatty acid condensate, wherein the polyalkylene glycol ether is an ethylene oxide-propylene oxide copolymer butyl ether having a molecular weight of greater than 1800amu and the fatty acid condensate is a polyhydroxystearic acid copolymer of condensation range greater than 2 units.

The preferred use rate of the polyalkylene glycol-fatty acid condensate or polyalkylene glycolether fatty acid condensate ranges from 2-10% w/v in the formulation and more preferably, 3-8%, depending on the active ingredient loading and the type of oil used in the formulation. At such levels, substantial stabilization to sedimentation and flocculation may be observed. In most cases, the condensate will be used in conjunction with another surfactant. The degree to which the condensate contributes to the dispersant effect in the formulation is dependent on the type and amount of surfactant used.

The active ingredient suitable for inclusion in an OD formulation preferably comprises at least one fungicide, insecticide, herbicide, plant growth regulator, miticide, nematocide, molluscicide, algicide, or other pesticide, or mixtures thereof. More particularly, the active ingredient is selected from, but not limited to, a fungicide, such as an alkylene bis(dithiocarbamate), such as Mancozeb (*i.e.* ethylenebisdithiocarbamate complex with Mg and Zn); Zineb (*i.e.* zinc(ethylenebis dithiocarbamate)polymer or Ziram (*i.e.* zinc bis(dimethyl-dithiocarbamate); Fosetyl-aluminium (*i.e.* aluminium tris-O-ethylphosphonate); Tebuconazole (*i.e. (*RS)-1-(4-chlorophenyl)-4,4-dimethyl-3-(1H-1,2,4-triazo-1-ylmethyl)-pentan-3-ol); copper hydroxide; and copper oxychloride; a phthalimide, such as Captan (*i.e.* N-(trichloromethylthio)-cyclohex-4-ene-1,2-dicarboximide); a herbicide, such as a sulphonyl urea, for example, Nicosulfuron (*i.e.* 2-[(4,6-dimethoxypyrimidin-2-ylcarbamoyl)sulfamoyl]-*N,N*-dimethylnicotinamide); and Azimsulfuron (*i.e.* 1-(4,6-dimethoxypyrimidin-2-yl)-3-[1-methyl-4-(2-methyl-2*H*-tetrazol-5-yl)pyrazol-5-yl sulfonyl] urea); triazolopyrimidines, such as Flumetsulam (*i.e.* 2',6'-difluoro-5-methyl[1,2,4]triazolo[1,5-*a*]pyrimidine-2-sulfonanilide); and Penoxsulam (*i.e.* 2-(2,2-difluoroethoxy)-N-(5,8-dimethoxy[1,2,4]triazolo[1,5-c]pyrimidin-2-yl)-6-(trifluoro-methyl)benzenesulfonamide); a triazine, such as Atrazine (*i.e.* 6-chloro-N-ethyl-N'-(1-methylethyl)-1,3,5,-triazine-2,4-diamine); a phenyl urea herbicide, such as Diuron (*i.e*.3-(3,4-dichlorophenyl)-1,1-dimethylurea); an insecticide, such as Aldicarb (*i.e.* 2-methyl-2-(methylthio)propionaldehyde-O-methylcarbamoyloxime); Carbaryl (*i.e.* 1-naphthyl methylcarbamate); and Diflubenzuron (*i.e.* N-[[(4-chlorophenyl)-amino]carbonyl]-2,6-difluorobenzamide).

Prior to an OD formulation being broadcast normally *via* foliar spray, it is diluted in water. For an OF formulation, the formulation is designed to be further diluted in an oil and therefore surfactant emulsifiers are not required. The formulation is otherwise similar to an OD formulation. It is a requirement of an OD formulation that the active ingredient be present in a finely divided state in an oil. Suitable oil phases for OD and OF formulations include any liquid at ambient temperature, which does not dissolve the active ingredient enough to cause crystal growth or physical instability.

The oil phase may comprise, but is not limited to, a paraffin oil, such as a kerosene, for example one of the EXXSOL® D range available from Exxon Chemical, more preferably, EXXSOL® D130; and HYDROSEAL® G250H available from Total. Seed oil esters, such as methyl and ethyl oleate, methyl and ethyl soyate and their corresponding fatty acids are also suitable. Aromatic hydrocarbons, such as alkyl benzenes and alkylnaphthalenes, polyalkylene glycol ethers, fatty acid diesters, fatty alkylamides and diamides, ketones and alcohols may also be suitable.

The suspension formulation of the invention may comprise further additives, such as a surfactant emulsifying agent to be added once the active ingredient has been suspended in the oil; to allow the oil phase to be delivered in an emulsified form; a surfactant dispersant and physical stability agents other than those of the invention, which may function as anti-settling or anti-syneresis agents. Where present, the surfactant dispersant can be included in any suitable amount up to the level required for colloidal stabilization of the solid phase after milling.

A surfactant dispersant suitable for OD and OF formulations is preferably selected from, but is not limited to, fatty acid-polyethylene glycol condensates such as TERSPERSE® 2510 dispersant; polyamine-fatty acid condensates, such as TERSPERSE® 4890 dispersant; random polyester condensates, such as TERSPERSE® 2520 dispersant; and salts of polyolefin condensates, such as TERSPERSE® 2422 dispersant, which are all products of Huntsman Corporation.

The choice of emulsifiers for the OD formulation tends to be dictated by the oils used. Generally, surfactants with a low hydrophobe-lipophobe balance ("HLB") are suitable. Such surfactants are preferably selected from, but are not limited to, one or more of ethoxylated fatty alcohols, sorbitan esters and their corresponding ethoxylates, ethoxylated fatty acids, ethoxylated castor oil, calcium and ammonium salts of alkylbenzene sulphonate, alkylsulphosuccinate salts, ethylene oxide-propylene oxide block copolymers, ethoxylated alkylamines and ethoxylated alkyl phenols. The emulsifiers for an OD formulation comprising Mancozeb as the active ingredient can be selected from the groups of castor oil ethoxylates, in particular TERMUL® 3512 emulsifier, alcohol ethoxylates in particular TERIC® 12A3, 12A4 and 17A2 fatty acid ethoxylates, sorbitan ester ethoxylates, such as ECOTERIC® T85 fatty acid ethoxylate, a sulphosuccinate, such as TERMUL® 3665 emulsifier, amine and calcium salts of dodecylbenzene sulphonate, such as the NANSA® EVM range of products, all of which are available from Huntsman Corporation.

The OD formulation may further comprise physical stability agents other than those of the invention, which may function as anti-settling or anti-syneresis agents. Of particular utility are the so-called rubber-type copolymers. Examples of such polymers include the KRATON® polymer range, which are available from Kraton Polymers. Most preferred are the KRATON® G series polymers, such as KRATON® G-1701 polymer.

Further additives which may be added to the formulation include colorants such as pigments and dyes, adjuvant surfactants, pH and other chemical stabilizers, defoamers, perfumes, odour masks and further density-adjusting solvents. The formulation may further comprise safeners.

The scope of the present invention also extends to a method of preparing an OD formulation comprising an active ingredient comprising the steps of:
a) preparing a surfactant solution premix by combining at least one surfactant selected from a polyalkylene glycol-fatty acid condensate or a polyalkylene glycolether fatty acid condensate, as defined herein above, with a surfactant and an oil to give a liquid;
b) dispersing the active ingredient in the surfactant solution by either stirring or high shear mixing;
c) milling the active ingredient dispersion to achieve a particle size average in the range 1-12 microns;
d) adding surfactant emulsifying agents; and
e) optionally adjusting the final concentration of active ingredient content by adding additional oil and other required ingredients,
wherein steps a) to d) are carried out in any order.

In one preferred aspect, step (e) of the above method includes the addition of a rubber-type copolymer as an additional anti-settling agent.

In one preferred embodiment of the present invention, the active ingredient comprises Mancozeb, preferably in a concentration of greater than 400g/L. In another preferred form, the formulation comprises Mancozeb in a concentration greater than 580g/L. The present inventors have advantageously been able to produce a formulation comprising Mancozeb in a concentration of greater than 480g/L, which formulation has been found to be stable long-term with no adverse effects on viscosity. In this formulation, no hard-packed layer is observed and the formulation remains fluid/pourable when stored for a time period of longer than 2 weeks at 54°C. The advantage provided by the present invention is that it achieves a superior stable high loading suspension formulation of Mancozeb, where alternative anti-settling agents, such as modified hectorite clays, appear to be ineffective. The formulation also affords excellent ease of dispersibility into water and results in a stable emulsion and suspension.

Once formulated, an OD or OF formulation produced by the method of the present invention would be expected to show stability on storage at temperatures ranging from -5°C to 54°C for up to 2 weeks and also stability at ambient temperature for up to 2 years.

### Detailed Description of the Invention

The following description relates only to specific embodiments of the present invention.

The invention will now be described with reference mainly to a high loading suspension formulation of Mancozeb, Diuron, Atrazine or Captan. It is anticipated that similar results can be found for suspension formulations in oil of other solid active ingredients, which are not soluble in the continuous phase.

A typical OD formulation would have a composition as described in Table 1 below:

**Table 1. Typical Components required for an Oil Dispersion Formulation**

| **Component** | **Typical amount, %w/w** | **Purpose** |
|---|---|---|
| Active ingredient | < 60 | As a toxicant |
| Dispersant (oil soluble) | 3 - 8 | To prevent particle aggregation |
| Emulsifier | 5 - 20 | To emulsify the oil phase when the formulation is added to water |
| Anti-settling and structuring agents | 0.5 - 5 | To prevent sedimentation and syneresis |
| Oil | balance | To form a continuous phase |

### EXAMPLES

All formulations were subject to accelerated storage at 54°C unless stated otherwise and where possible, suspensibility measurements were conducted pre-storage at 2%w/v in 20ppm ambient water according to CIPAC MT161. Despite such testing not being an official requirement of the FAO regarding OD formularies, in this instance residue suspensibilities were determined to best characterise the quality of the oil/solid dispersion when diluted.

### OF and OD Formulations using Mancozeb as the active ingredient

### Example 1 (Comparative)

### Preparation of an OD formulation comprising a Bentone® anti-settling agent

The following formulation was prepared:

| | |
|---|---|
| Mancozeb (85%w/w Technical) | 567 g/L |
| TERSPERSE® 2510 dispersant | 70 |
| SURFONIC® LF17 surfactant | 15 |
| SURFONIC® P3 surfactant | 15 |
| SURFONIC® TDA3B surfactant | 10 |
| TERSPERSE® 2202 dispersant | 5 |
| Bentone® IPM | 5 |
| EXXSOL®D130/HYDROSEAL® G250H (50:50 blend) | to Volume (1 Litre) |

The formulation was made in the manner known to those skilled in the art by dissolving the oil dispersant TERSPERSE® 2510 dispersant in 90% of the oil phase and adding the Mancozeb powder to it with high shear mixing to form a slurry which was then milled in a bead mill to produce a millbase with the technical at an average particle size (d_{0.5}) of less than 5 microns (µm). To the millbase is then added the other surfactants and the Bentone® thickener with stirring.

The formulation was placed on storage at 54°C. While the initial emulsification of this formulation was satisfactory, after less than 5 days the formulation formed into a thick gel with a hard packed sediment layer.

This formulation demonstrates that even relatively high amounts of the Bentone® thickener are not able to prevent sedimentation and also afford a satisfactory viscosity for this product.

### Example 2 (Comparative)

The following **OF formulation** was prepared:

| | |
|---|---|
| Mancozeb (85%w/w Technical) | 705.88 g/L |
| TERSPERSE® 2510 dispersant | 67.5 |
| HYDROSEAL® G250H | to Volume (1 Litre) |

TERSPERSE® 2510 dispersant is a polyalkylene glycol-fatty acid condensate where n is no more than 34 units as per Structure (1).

The oil dispersant TERSPERSE® 2510 dispersant is dissolved in 90% of the oil phase and the Mancozeb powder is added to it with high shear mixing to form a slurry, which is then milled in a bead mill to produce a millbase with the technical at an average particle size (d_{0.5}) of less than 5 microns (µm). The final formulation is then made up to volume with further HYDROSEAL® G250H and the mixture was stirred until it was homogeneous.

The formulation was placed on storage at 54°C. The emulsification of this formulation was not satisfactory and formulation was low in viscosity. After 7 days, the formulation showed 10% syneresis and a hard packed sediment layer which was non-redispersable.

This formulation demonstrates that TERSPERSE® 2510 dispersant is not able to prevent sedimentation and also afford a satisfactory viscosity for this product.

### Example 3

The following **OD formulation** was prepared:

| | |
|---|---|
| Mancozeb (85%w/w Technical) | 705.88 g/L |
| TERSPERSE® 2510 dispersant | 60 |
| DS 10486 | 40 |
| HYDROSEAL® G250H | to Volume (1 Litre) |

DS 10486 is a monoblock butyl ether condensate with n + m being on average 40 units as per Structure (1) and x is on average 5 units as per Structure (2).

The oil dispersant TERSPERSE® 2510 dispersant and DS 10486 is dissolved in 90% of the oil phase at 55°C until a clear homogeneous solution is obtained. After the oil mixture was cooled to ambient temperature, the mancozeb powder is added with high shear mixing to form a slurry, which is then milled in a bead mill to produce a millbase with the technical at an average particle size (d_{0.5}) of less than 5 microns (µm). The final formulation is then made up to volume with further HYDROSEAL® G250H and the mixture was stirred until it was homogeneous.

The formulation was placed on storage at 54°C. The emulsification of this formulation was satisfactory. After 7 days, the formulation showed only 3.6% syneresis, no change in viscosity and no hard packed sediment layer was observed.

This formulation demonstrates that a combination of TERSPERSE® 2510 dispersant and DS 10486 is able to prevent sedimentation and affords a satisfactory viscosity and that DS 10486 is also able to function as an emulsifier.

### Example 4

The following **OD formulation** was prepared:

| | |
|---|---|
| Mancozeb (85%w/w Technical) | 705.88 g/L |
| TERSPERSE® 2510 dispersant | 38.75 |
| DS 10485 | 38.75 |
| TERMUL® 3665 emulsifier | 90 |
| HYDROSEAL® G250H | to Volume (1 Litre) |

DS 10485 is a diblock condensate with n + m being on average 90 units as per Structure (1) and x is on average 2.6 units as per Structure (2).

The oil dispersant TERSPERSE® 2510 dispersant and DS 10485 is dissolved in 90% of the oil phase at 55°C until a clear homogeneous solution is obtained. After the oil mixture was cooled to ambient temperature, the Mancozeb powder is added with overhead mixing to form a slurry. The Mancozeb pre-mix is transferred to a bead mill and milling is continued until an average particle size (d_{0.5}) of less than 5 microns (µm) is obtained. The TERMUL® 3665 emulsifier was added to the milled pre-mix under high shear. The final formulation is then made up to volume with further HYDROSEAL® G250H and the mixture was stirred until it was homogeneous.

The formulation was placed on storage at 54°C and 20°C and after 14 days no hard pack layer or flocculation was observed and the formulation only displayed a trace of syneresis (<1%). The formulation showed excellent emulsification on dilution with water. The residue suspensibility of the formulation was measured using CIPAC MT 161 (suspensibility of suspension concentrate formulations) and found to be 99%.

### Example 5

The following **OD formulation** was prepared as per the method described in Example 4:

| | |
|---|---|
| Mancozeb (85%w/w Technical) | 705.88 g/L |
| TERSPERSE® 2510 dispersant | 60 |
| DS 10486 | 40 |
| TERMUL® 3665 emulsifier | 70 |
| HYDROSEAL® G250H | to Volume (1 Litre) |

The formulation was placed on storage at 54°C and 20°C and after 14 days and no hard pack layer or flocculation was observed. The formulation showed a trace of syneresis (<1%). The formulation showed average bloom and excellent emulsification on dilution with water. The residue suspensibility of the formulation was measured using CIPAC MT 161 (suspensibility of suspension concentrate formulations) and found to be 99%.

### Example 6

The following formulation was prepared as an additive which may further assist the structuring effect of polyalkylene glycol fatty acid condensates:

| | |
|---|---|
| KRATON® G-1701 | 15.00%w/w |
| SOLVESSO® 200 | 85.00 |

KRATON® G-1701 polymer is described as a polymer of styrene and polyethylene/polypropylene as a diblock.

SOLVESSO® 200 is an aromatic solvent available from Exxon-Mobil.

To an appropriate vessel, the required amount of SOLVESSO® 200 and KRATON® G-1701 are added. The resultant mixture is then heated with moderate stirring until such point that a gelatinous, yet flowable, homogeneous consistency is observed. On cooling, the viscosity increases further forming a workable gel, which is stored for later use.

### Example 7

The following formulation was prepared:

| | |
|---|---|
| Mancozeb (85%w/w Technical) | 705.88 g/l |
| TERSPERSE® 2510 | 40.00 |
| DS 10486 | 33.33 |
| DS 10541 | 16.67 |
| TERMUL® 3665 | 70.00 |
| Structuring blend from Example 6 comprising KRATON® G-1701 and SOLVESSO® 200 | 40.00 |
| HYDROSEAL® G250H | to Volume (1 litre) |

DS 10541 is a monoblock butyl ether condensate with n + m being on average 120 units as per Structure (1) and x is on average 5 units as per Structure (2).

To an appropriately sized beaker, 333.12g/L of HYDROSEAL® G250H was added, followed by the required amounts of TERSPERSE® 2510, DS 10486, DS 10541 and TERMUL® 3665. The mixture was then subject to moderate heating (approx. 30-40° C) for several minutes, then exposed to high shear mixing to form a homogeneous pre-dispersion. Once cooled to ambient temperature, the required amount of Mancozeb (85%w/w technical) was dispersed followed gradual addition of structuring blend from Example 6 comprising KRATON® G-1701 and SOLVESSO® 200. The resultant mixture was then subject to further high shear until satisfied that a homogeneous clump-free dispersion was achieved.

The formulation initially appears as a homogeneous yellow dispersion of intermediate viscosity. After storage for 14 days at 54° C, the formulation displayed 6.6% syneresis in addition to a slight increase in viscosity, however remained flowable with only the presence of minor re-dispersible soft packing.

### OD Formulations using Diuron 400g/L as the active ingredient

### Example 8 (Comparative)

The following formulation was prepared:

| | |
|---|---|
| Diuron (95%w/w Technical) | 421.05 g/l |
| TERSPERSE® 2510 | 40.00 |
| TERIC® 12A3N | 100.00 |
| TERMUL® 3665 | 15.00 |
| Rheology Modifier | - |
| EXXSOL® D130 | to Volume (1 litre) |

To an appropriately sized beaker, approximately 150g/L EXXSOL® D130 was added, followed by the required amounts of TERSPERSE® 2510, TERIC® 12A3N and TERMUL® 3665. The mixture was then subject to moderate heating (approx. 30-40° C) for several minutes, then exposed to high shear mixing to form a homogeneous pre-dispersion. Once cooled to ambient temperature, the required amount of un-milled Diuron (95%w/w Technical) was dispersed and high shear mixing was continued for several minutes. The formulation was then allowed to settle, made to the required volume with further EXXSOL® D130 (if necessary), and returned to shear until homogeneous.

The formulation initially appears as a homogeneous white dispersion of relative low viscosity, that when diluted in 20ppm ambient water emulsifies readily. Of note is the development of syneresis within several minutes. Following storage for 14 days at 54° C, it was observed that the above formulation had developed 55% syneresis in association with the presence of a permeable yet somewhat rigid gel-like matrix which upon stirring proved difficult to fluidise.

The formulation demonstrates relatively less than optimum stability afforded by a lack of suitable rheology modifier.

### Example 9

The following formulation was prepared according to the method outlined in Example 8:

| | |
|---|---|
| Diuron (98%w/w Technical) | 408.16 g/l |
| TERSPERSE® 2510 | 48.00 |
| HCA00103/132 | 12.00 |
| TERIC® 12A3N | 100.00 |
| TERMUL® 3665 | 15.00 |
| Structuring blend from Example 6 comprising KRATON® G-1701, SOLVESSO® 200 | 97.52 |
| EXXSOL® D130 | to Volume (1 litre) |

HCA00103/132 is a 1:1 blend of a diblock condensate with n + m being on average 45 units as per Structure (1) and x is on average 5 units as per Structure (2) and a diblock condensate with n + m being on average 90 units as per Structure (1) and x is on average 5 units as per Structure (2).

The formulation initially appears as a homogeneous white dispersion of a relative intermediate to high viscosity, that when diluted in ambient 20ppm water emulsifies readily to yield a residue suspensibility of 77% after 30 minutes. Following storage for 7 days at 54°C, the formulation showed an increase in viscosity however remained homogeneous and retained flowability. Of importance was the notable suppression of syneresis, which was measured at 8.8%. At room temperature following the same period, the formulation remained flowable and homogeneous with trace syneresis.

The formulation demonstrates the improved effect of using an alternate fatty acid-alkylene glycol in combination with KRATON® G-1701.

### OD Formulations using Atrazine 400g/L as the active ingredient

### Example 10 (Comparative)

The following formulation was prepared according to the method outlined in Example 3:

| | |
|---|---|
| Atrazine | 400.00 g/l |
| TERSPERSE® 2510 | 40 |
| TERIC® 12A3N | 100 |
| TERMUL® 3665 | 15.00 |
| EXXSOL® D130 | to Volume (1 litre) |

The formulation initially appears as a homogeneous white dispersion of a relative intermediate viscosity which gives suitable emulsification performance in 20ppm ambient water. Following storage for 14 days at 54°C, the formulation displayed 48% syneresis with the bulk consisting of a homogeneous easily permeable gel-like structure that through stirring was reversible to a flowable consistency similar to its pre-storage appearance.

### Atrazine 400g/L comprising polyalkylene glycol-fatty acid condensates

### Example 11

The following formulation was prepared according to the method outlined in Example 3:

| | |
|---|---|
| Atrazine | 400.00 g/l |
| TERSPERSE® 2510 | 48.00 |
| HCA00103/132 | 12.00 |
| TERIC® 12A3N | 100.00 |
| TERMUL® 3665 | 15.00 |
| Structuring blend from Example 6 comprising KRATON® G-1701 and SOLVESSO® 200 | 60.00 |
| EXXSOL® D130 | to Volume (1 litre) |

The formulation initially appears as a homogeneous white dispersion of a relative intermediate viscosity which gives suitable emulsification performance in 20ppm ambient water. Following storage for 7 days at 54°C, the formulation displayed 14.0 % syneresis with the bulk remaining flowable, homogeneous and free of any packing or caking. After the same time period at ambient temperature, the formulation maintains flowability with only a trace of syneresis.

Where the terms "comprise", "comprises", "comprised" or "comprising" are used in this specification, they are to be interpreted as specifying the presence of the stated features, integers, steps or components referred to, but not to preclude the presence or addition of one or more other feature, integer, step, component or group thereof.

## Claims

1. An agricultural oil-based suspension formulation comprising an active ingredient suspended in finely divided form in an oil; and at least one surfactant selected from a polyalkylene glycol-fatty acid condensate or a polyalkylene glycolether fatty acid condensate formed from a reaction between a compound having Structure (1) and a compound having Structure (2): 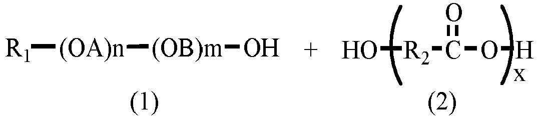
wherein R₁ = H or a C₁-C₃₀ alkyl radical;
A and B are ethylene or propylene groups in succession or random;
n = 0 or >1; and
m=0 or >1,
and wherein n+m > 34;
R₂ = C₈-C₃₀ alkyl or alkylene radical (branched or linear); and
x = >1.

2. An agricultural oil-based suspension formulation according to Claim 1, wherein the surfactant comprises a diblock condensate of polyethylene glycol and a polyhydroxystearic acid copolymer of condensation range greater than 2 units.

3. An agricultural oil-based suspension formulation according to Claim 1, wherein the surfactant comprises at least one monoblock condensate of a polyalkylene glycol ether-fatty acid condensate, wherein the polyalkylene glycol ether is an ethylene oxide-propylene oxide copolymer butyl ether having a molecular weight of greater than 1800amu and the fatty acid condensate is a polyhydroxystearic acid copolymer of condensation range greater than 2 units.

4. An agricultural oil-based suspension formulation according to Claim 1, wherein the formulation is selected from an Oil Dispersion ("OD") or an Oil-miscible Flowable ("OF") formulation.

5. An agricultural oil-based suspension formulation according to Claim 4, wherein the OD formulation further comprises an emulsifying agent and/or a rubber-type copolymer as an additional anti-settling agent.

6. An agricultural oil-based suspension formulation according to Claim 1, wherein the active ingredient is selected from Mancozeb, Diuron, Atrazine and Captan, or mixtures thereof.

7. An agricultural oil-based suspension according to Claim 6, wherein the active ingredient is Mancozeb, and is present in a concentration greater than 400g/L, preferably greater than 580g/L.

8. An agricultural oil-based suspension formulation according to Claim 1, having a rate of use of polyalkylene glycol-fatty acid condensate or polyalkylene glycolether fatty acid condensate in a range of from 2-10% w/v, preferably of 3-8% w/v in the formulation.

9. An agricultural oil-based suspension formulation according to Claim 8, wherein the active ingredient is selected from Mancozeb, Diuron, Atrazine and Captan, or mixtures thereof.

10. An agricultural oil-based suspension formulation according to Claim 9, wherein the active ingredient is Mancozeb, and is present in a concentration greater than 400g/L, preferably greater than 580g/L.

11. A method of preparing an OD formulation comprising an active ingredient comprising the steps of:
a) preparing a surfactant solution premix by combining at least one surfactant selected from a polyalkylene glycol-fatty acid condensate or a polyalkylene glycolether fatty acid condensate, as defined in claim 1, with a surfactant and an oil to give a liquid;
b) dispersing the active ingredient in the surfactant solution by either stirring or high shear mixing;
c) milling the active ingredient dispersion to achieve a particle size average in the range 1-12 microns;
d) adding surfactant emulsifying agents; and
e) optionally adjusting the final concentration of active ingredient content by adding additional oil and other required ingredients,
wherein steps a) to d) are carried out in any order.

12. The method according to Claim 11, wherein step (e) includes adding a rubber-type copolymer as an additional anti-settling agent.

13. The method according to Claim 12, wherein the active ingredient is selected from Mancozeb, Diuron, Atrazine or Captan, or mixtures thereof.

14. The method according to Claim 13, wherein the active ingredient is Mancozeb.

15. The method according to Claim 14, wherein the Mancozeb is present in a concentration greater than 400g/L.

## Patentansprüche

1. Landwirtschaftliche Suspensionsformulierung auf Ölbasis, umfassend einen wirksamen Inhaltsstoff, der in fein verteilter Form in einem Öl suspendiert ist; und wenigstens ein Tensid, das ausgewählt ist aus einem Polyalkylenglykol-Fettsäure-Kondensat oder einem Polyalkylenglykolether-Fettsäure-Kondensat, gebildet aus einer Reaktion zwischen einer Verbindung mit Struktur (1) und einer Verbindung mit Struktur (2): 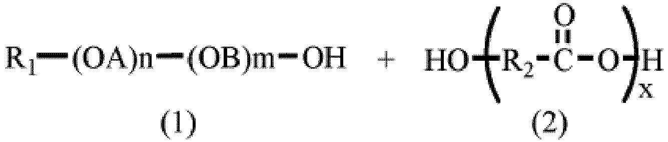
wobei R₁ = H oder ein C₁-C₃₀-Alkylrest;
A und B Ethylen- oder Propylengruppen, aufeinanderfolgend oder statistisch verteilt, sind;
n = 0 oder > 1; und
m = 0 oder > 1,
und wobei n+m > 34;
R₂ = C₈-C₃₀-Alkyl- oder Alkylenrest (verzweigt oder linear); und
x = > 1.

2. Landwirtschaftliche Suspensionsformulierung auf Ölbasis nach Anspruch 1, wobei das Tensid ein Diblockkondensat aus Polyethylenglykol und einem Polyhydroxystearinsäure-Copolymer mit einem Kondensationsbereich von mehr als 2 Einheiten umfasst.

3. Landwirtschaftliche Suspensionsformulierung auf Ölbasis nach Anspruch 1, wobei das Tensid wenigstens ein Monoblockkondensat eines Polyalkylenglykolether-Fettsäure-Kondensats umfasst, wobei der Polyalkylenglykolether ein Ethylenoxid-Propylenoxid-Copolymer-Butylether mit einem Molekulargewicht von mehr als 1800 amu ist und das Fettsäure-Kondensat ein Polyhydroxystearinsäure-Copolymer mit einem Kondensationsbereich von mehr als 2 Einheiten ist.

4. Landwirtschaftliche Suspensionsformulierung auf Ölbasis nach Anspruch 1, wobei die Formulierung ausgewählt ist aus einer Öl-Disporsions("OD)- oder einer ölmischbaren fließfähigen ("OF") Formulierung.

5. Landwirtschaftliche Suspensionsformulierung auf Ölbasis nach Anspruch 4, wobei die OD-Formulierung außerdem einen Emulgator und/oder ein Kautschuk-Copolymer als ein zusätzliches Antiabsetzmittel umfasst.

6. Landwirtschaftliche Suspensionsformulierung auf Ölbasis nach Anspruch 1, wobei der wirksame Inhaltsstoff ausgewählt ist aus Mancozeb, Diuron, Atrazine und Captan oder Mischungen davon.

7. Landwirtschaftliche Suspension auf Ölbasis nach Anspruch 6, wobei der wirksame Inhaltsstoff Mancozeb ist und in einer Konzentration von mehr als 400 g/l, vorzugsweise mehr als 580 g/l, vorliegt.

8. Landwirtschaftliche Suspensionsformulierung auf Ölbasis nach Anspruch 1, mit einer Anwendungsrate von Polyalkylenglykol-Fettsäure-Kondensat oder Polyalkylenglykolether-Fettsäure-Kondensat in einem Bereich von 2-10% w/v, vorzugsweise von 3-8% w/v, in der Formulierung.

9. Landwirtschaftliche Suspensionsformulierung auf Ölbasis nach Anspruch 8, wobei der wirksame Inhaltsstoff ausgewählt ist aus Mancozeb, Diuron, Atrazine und Captan oder Mischungen davon.

10. Landwirtschaftliche Suspensionsformulierung auf Ölbasis nach Anspruch 9, wobei der wirksame Inhaltsstoff Mancozeb ist und in einer Konzentration von mehr als 400 g/l, vorzugsweise mehr als 580 g/l, vorliegt.

11. Verfahren zur Herstellung einer OD-Formulierung, umfassend einen wirksamen Inhaltsstoff, welches die Schritte umfasst:
a) Herstellen einer Tensidlösungsvormischung durch Zusammenbringen von wenigstens einem Tensid, das ausgewählt ist aus einem Polyalkylenglykol-Fettsäure-Kondensat oder einem Polyalkylenglykolether-Fettsäure-Kondensat, wie definiert in Anspruch 1, mit einem Tensid und einem Öl, um eine Flüssigkeit zu ergeben;
b) Dispergieren des wirksamen Inhaltsstoffes in der Tensidlösung durch entweder Rühren oder Mischen bei hoher Scherung;
c) Vermahlen der Dispersion des wirksamen Inhaltsstoffes, um einen Teilchengrößenmittelwert im Bereich von 1-12 Mikrons zu erreichen;
d) Zugeben von Tensidemulgatoren; und
e) fakultativ Einstellen der Endkonzentration des Gehaltes an wirksamem Inhaltsstoff durch Zugeben von zusätzlichem Öl und anderen erforderlichen Inhaltsstoffen,
wobei die Schritte a) bis d) in irgendeiner Reihenfolge durchgeführt werden.

12. Verfahren nach Anspruch 11, wobei Schritt (e) das Zugeben eines Kautschuk-Copolymers als einem zusätzlichen Antiabsetzmittel einschließt.

13. Verfahren nach Anspruch 12, wobei der wirksame Inhaltsstoff ausgewählt ist aus Mancozeb, Diuron, Atrazine oder Captan oder Mischungen davon.

14. Verfahren nach Anspruch 13, wobei der wirksame Inhaltsstoff Mancozeb ist.

15. Verfahren nach Anspruch 14, wobei das Mancozeb in einer Konzentration von mehr als 400 g/l vorliegt.

## Revendications

1. Formulation pour une suspension agricole à base d'huile comprenant un ingrédient actif en suspension sous forme finement divisée dans une huile ; et au moins un agent tensioactif choisi parmi un condensat d'acide gras de polyalkylèneglycol ou un condensat d'acide gras de polyalkylèneglycoléther formé à partir d'une réaction entre un composé ayant la structure (1) et un composé ayant la structure (2) : 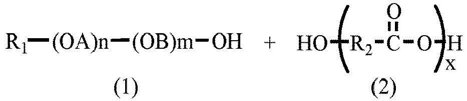
où R₁ = H ou un radical alkyle en C₁-C₃₀ ;
A et B sont des groupes ethylènes ou propylènes en succession ou au hasard ;
n = 0 ou >1 ; et
m = 0 ou > 1,
et où n+m > 34
R₂ = un radical alkyle ou alkylène en C₈-C₃₀ (ramifié ou linéaire) ; et
x = > 1

2. Formulation pour une suspension agricole à base d'huile selon la revendication 1, où l'agent tensioactif comprend un condensat dibloc de polyéthylène glycol et un copolymère d'acide polyhydroxystéarique de plage de condensation supérieure à 2 unités.

3. Formulation pour une suspension agricole à base d'huile selon la revendication 1, où le tensioactif comprend au moins un condensat monobloc d'un condensat d'acide gras-polyalkylèneglycol éther, où le polyalkylèneglycol éther est un éther butylique de copolymère d'oxyde de propylène et d'oxyde d'éthylène ayant un poids moléculaire supérieur à 1800amu et le condensat d'acide gras est un copolymère d'acide polyhydroxystéarique de plage de condensation supérieure à 2 unités.

4. Formulation pour une suspension agricole à base d'huile selon la revendication 1, où la formulation est choisie parmi une formulation de dispersion d'huile ("OD") ou une formulation fluide miscible à l'huile ("OF").

5. Formulation pour une suspension agricole à base d'huile selon la revendication 4, où la formulation OD comprend en outre un agent émulsifiant et/ou un copolymère de type caoutchouc comme agent suspenseur supplémentaire.

6. Formulation pour une suspension agricole à base d'huile selon la revendication 1, où le principe actif est choisi parmi le Mancozeb, le Diuron, l'Atrazine et le Captan, ou des mélanges de ceux-ci.

7. Suspension agricole à base d'huile selon la revendication 6, où l'ingrédient actif est le mancozèbe, et est présent en une concentration supérieure à 400g/L, de préférence supérieure à 580g/L.

8. Formulation pour une suspension agricole à base d'huile selon la revendication 1, ayant un taux d'utilisation de condensat d'acide gras de polyalkylèneglycol ou de condensat d'acide gras de polyalkylèneglycol-éther compris dans une plage de 2 à 10 % p/v, de préférence de 3 à 8 % p/v dans la formulation.

9. Formulation pour une suspension agricole à base d'huile selon la revendication 8, où l'ingrédient actif est choisi parmi le Mancozeb, le Diuron, l'Atrazine et le Captan, ou des mélanges de ceux-ci.

10. Formulation pour une suspension agricole à base d'huile selon la revendication 9, où l'ingrédient actif est le mancozèbe, et est présent en une concentration supérieure à 400g/L, de préférence supérieure à 580g/L.

11. Procédé de préparation d'une formulation OD comprenant un ingrédient actif comprenant les étapes suivantes :
a) préparer un prémélange de solution d'agent tensioactif en combinant au moins un agent tensioactif choisi parmi un condensat d'acide gras de polyalkylèneglycol ou un condensat d'acide gras de polyalkylèneglycol-éther, tel que défini dans la revendication 1, avec un agent tensioactif et une huile pour donner un liquide ;
b) disperser le principe actif dans la solution d'agent tensioactif par agitation ou par mélange à fort cisaillement ;
c) le broyage de la dispersion de l'ingrédient actif pour obtenir une taille moyenne de particules comprise entre 1 et 12 microns ;
d) l'ajout d'agents émulsifiants tensioactifs ; et
e) l'ajustement facultatif de la concentration finale de la teneur en principes actifs par l'ajout d'huile supplémentaire et d'autres ingrédients nécessaires,
où les étapes a) à d) sont exécutées dans un ordre quelconque.

12. Procédé selon la revendication 11, où l'étape (e) comprend l'addition d'un copolymère de type caoutchouc comme agent suspenseur supplémentaire.

13. Procédé selon la revendication 12, où l'ingrédient actif est choisi parmi le mancozèbe, le diuron, l'atrazine ou le captan, ou des mélanges de ceux-ci.

14. Procédé selon la revendication 13, où l'ingrédient actif est le mancozèbe.

15. Procédé selon la revendication 14, où le mancozèbe est présent en une concentration supérieure à 400g/L.
